# EUROPEAN PATENT APPLICATION

(11) **EP 4 738 782 A1**
(43) Date of publication of application: **06.05.2026**
(21) Application number: 25211391.5
(22) Date of filing: 27.10.2025
(51) Int. Cl.: H04L 45/00

(54) **CAPABILITY BASED AUTONOMOUS STORAGE AREA NETWORK TRAFFIC ENGINEERING**

(30) Priority: 31.10.2024 US 202418933536
(71) Applicant: Avago Technologies International Sales Pte. Limited, Singapore 768923 (SG)
(72) Inventor: Gnanasekaran, Sathish, Irvine, CA 92618 (US); Chidambaram, Pushpanathan, Irvine, CA 92618 (US); Rajarathinam, Ponpandiaraj, Irvine, CA 92618 (US)
(74) Representative: Grünecker Patent- und Rechtsanwälte PartG mbB

(57) **Abstract**

A network device for capability-based autonomous SAN traffic engineering is provided. The network device includes one or more ingress points configured to receive one or more packets from a first network node, a first set of buffers configured to store packets associated with a first group of network nodes, and a packet processing logic configured to determine a communication speed of the first network node over a first channel, wherein the packet processing logic is configured to assign the first network node to a first group nodes of the plurality of groups of network nodes, and store the one or more packets from the first network node in the first set of buffers.

## Description

### COPYRIGHT STATEMENT

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### FIELD

The present disclosure relates, in general, to methods, systems, and apparatuses for traffic engineering in a storage area network (SAN).

### BACKGROUND

Link speeds in SANs have increased exponentially with each passing generation, from 1G to 128G, with 256G technology in development. Storage protocols for higher performance have been developed and deployed. SANs are being designed for use as a unified network, carrying both IP-based ULPs (such as NVMe over IP, SCSI over IP, etc.) along with native FC-based ULPs (such as SCSI over FC, FICON over FC, NVMe over FC, etc.). As a result, SANs are required to host applications with a wide range of performance characteristics.

In some approaches to traffic engineering in SANs, network data plane resources, such as buffers, virtual channels, and scheduling slots (e.g., priority) are shared by a large number of traffic flows relative to the number of resources. The traffic flows sharing a given resource are typically grouped together randomly. Sharing of resources across a diverse collection of traffic flows with different performance capabilities creates bottlenecks to performance and efficiency, and can result in service level agreement (SLA) violations.

Accordingly, a framework for capability-based engineering of traffic flows is provided.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1 is a schematic block diagram of a network switch with capability-based traffic engineering, in accordance with various embodiments;
Fig. 2 is a schematic block diagram of a storage area network implementing capability-based traffic engineering, in accordance with various embodiments;
Fig. 3 is a schematic block diagram of dataplane operations within a storage area network implementing capability-based traffic engineering, in accordance with various embodiments; and
Fig. 4 is a hardware block diagram of a computer system for a network switch with capability-based traffic engineering, in accordance with various embodiments.

### DETAILED DESCRIPTION OF EMBODIMENTS

Various embodiments set forth a network device for providing capability-based traffic engineering in SANs.

In some embodiments, an apparatus for providing capability-based traffic engineering in SANs is provided. The apparatus includes one or more ingress points configured to receive one or more packets from a first network node, and a logic configured to determine a communication speed of the first network node. The logic is configured to determine, based at least in part on the communication speed of the first network node, a group of network nodes of a plurality of groups of network nodes to assign the first network node. In response to determining that the communication speed of the first network node is greater than or equal to a first speed, the logic is further configured to assign the first network node to a first group of network nodes of the plurality of groups of network nodes, wherein the first group of network nodes includes network nodes configured to communicate at at least a first speed, and store the one or more packets from the first network node in a first set of buffers. The first set of buffers is configured to store packets associated with the first group of network nodes.

In further embodiments, a network device with capability-based traffic engineering in SANs is provided. The network device includes one or more ingress points configured to receive one or more packets from a first network node, a first set of buffers configured to store packets associated with a first group of network nodes, the first group of network nodes configured to communicate at at least a first speed, and a packet processing logic configured to determine a communication speed of the first network node over a first channel. The packet processing logic is configured to determine, based at least in part on the communication speed of the first network node, a group of networks nodes of a plurality of groups of network nodes to assign the first network node. In response to determining that the communication speed of the first network node is greater than or equal to a first speed, the packet processing logic is configured to assign the first network node to a first group nodes of the plurality of groups of network nodes, and store the one or more packets from the first network node in the first set of buffers.

In further embodiments, a system with capability-based traffic engineering is provided. The system includes one or more network nodes including a first network node, and a network device coupled to the one or more network nodes. Each network node of the one or more network nodes is connected to the network device via a respective communication channel, wherein the first node is coupled to the first network device via a first channel. The network device includes one or more ingress points configured to receive one or more packets from the first network node, a first set of buffers configured to store packets associated with a first group of network nodes, the first group of network nodes configured to communicate at at least a first speed, and a packet processing logic configured to determine a communication speed of the first network node over the first channel. The packet processing logic is configured to determine, based at least in part on the communication speed of the first network node, a group of networks nodes of a plurality of groups of network nodes to assign the first network node. In response to determining that the communication speed of the first network node is greater than or equal to a first speed, the packet processing logic assigns the first network node to a first group nodes of the plurality of groups of network nodes, and stores the one or more packets from the first network node in the first set of buffers.

In the following description, for the purposes of explanation, numerous details are set forth to provide a thorough understanding of the described embodiments. It will be apparent to one skilled in the art, however, that other embodiments may be practiced without some of these details. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

When an element is referred to herein as being "connected" or "coupled" to another element (which includes mechanically, electrically, or communicatively connecting or coupling), it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Incoming packets from various storage devices in an SAN are written to shared buffers over shared communication channels. Sharing of these resources between the widely varying traffic flows results in lower performance and inefficiency.

For example, traffic flows with lower performance capability (e.g., lower speed) use buffers for a relatively longer duration of time than higher performing (e.g., higher speed) traffic flows, which in turn limits buffer availability for higher performance traffic flows. This results in degradation of performance. Packet transmission time on a 1 gigabit per second (Gbps) link, or 1G link, is approximately 17µs compared to 170ns on a 128 Gbps (or 128G) link. Thus, each buffer is held by a 1G port approximately 100x longer than a 128G link. Some approaches to address these issues, such as deep buffering, cause significant latency increases in congestion scenarios, and introduce a significant increase in integrated circuit (IC) costs.

Taking a link speed of 128G, a link length of 100 meters, a frame size of 2048 bytes, and the need to support 8 performance bands characterized by transmit speed (e.g., 1G, 2G, 4G, 8G, 16G, 32G, 64G, 128G). To support various transmission speeds over the such link, the following table summarizes the number of buffers that would be utilized.

**Table 1: Buffers utilized to support corresponding transmit speed**

| Transmit Speed | 1G | 2G | 4G | 8G | 16G | 32G | 64G | 128G |
|---|---|---|---|---|---|---|---|---|
| Buffers | 15 | 16 | 18 | 22 | 27 | 39 | 64 | 113 |

To support 8 performance bands (e.g., 8 transmit speeds) in an application specific IC (ASIC) with 96 ports, approximately 100,000 buffers would be utilized, increasing ASIC costs.

Moreover, in a unified network supporting multi-protocol tenants, performance interference across different tenants can affect critical performance sensitive applications, and result in SLA violations. Performance capabilities may sometimes temporarily degrade due to the run-time resource availability, and therefore performance impairment can be mitigated by maximizing the resource utilization.

Thus, a capability-based autonomous SAN traffic engineering framework that actively choose the specific flows to share network resources is provided. This achieves efficient buffer usage and traffic segregation, where traffic flows with similar performance capabilities are grouped together and allocated a dedicated set of buffers. As a result, buffer hold times are similar for every flow sharing the same set of buffers.

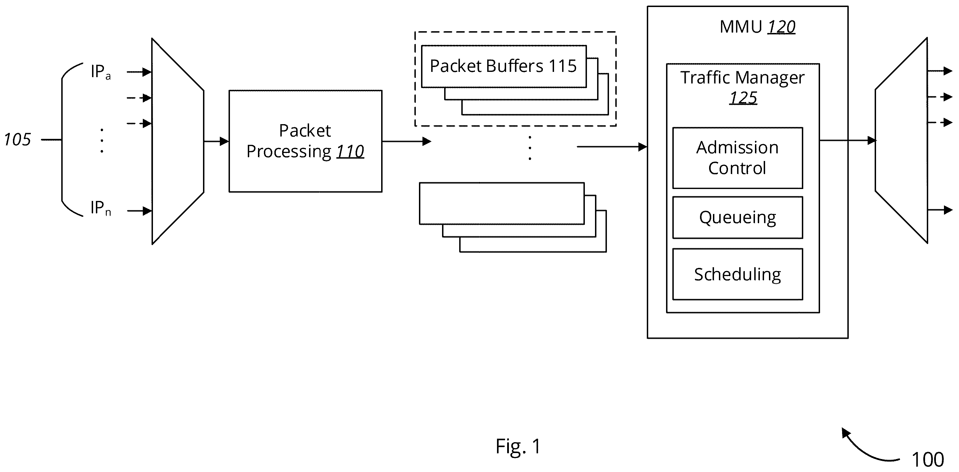

Fig. 1 is a schematic block diagram of a network device 100, in accordance with various embodiments. The network device 100 (referred to hereinafter simply as "switch") includes one or more ingress points IPₐ - IPₙ 105, packet processing logic 110, one or more buffers 115, memory management unit (MMU) 110 which includes a traffic manager 125, and which may output traffic to one or more egress points. It should be noted that the various elements of the network device 100 are schematically illustrated in Fig. 1, and that modifications to the various components and other arrangements of the network device 100 may be possible and in accordance with the various embodiments.

To protect each performance band from interfering with the other band, dedicated buffers are required to be allocated for each band. Considering the different speeds (1G to 128G), the number of buffers required in an ASIC that supports 96 ports would amount to approximately 100k buffers, each buffer being able to store a full-size FC frame. The cost associated with supporting such a huge number of buffers is very prohibitive. For shorter frame size transfers, the number of buffers required would be even more, thus making it almost impossible to go in that direction.

In various embodiments, the network device 100 may be a switch configured to receive and forward packets from one or more source nodes to one or more respective destination nodes. In some embodiments, the network device may be a SAN switch. In other embodiments, a different network device 100 may be utilized, such as a router, hub, gateway (e.g., a residential gateway (RG)), or access point (AP), configured to provide switching functionality. Thus, a network device 100, as used herein, may refer to a device on a computer network through which communication between devices (e.g., a host device and a destination device) is facilitated.

While "switch" and "switching" are used herein in reference to packet switching functionality, it is to be understood that the terms "switch" and "switching" may, in various embodiments, further include "routers" and "routing" functionality. As previously described, switching may refer generally to the process of receiving packets and forwarding those packets to a respective destination. For example, a network switch may forward traffic based on a layer 2 address (such as a media access controller (MAC) address). A router may, in various examples, function as a network switch. Furthermore, the router may route packets based on a layer 3 address (e.g., an internet protocol (IP) address), and according to a routing table. Moreover, while various examples refer to packets, it should be understood that in other embodiments, other types of protocol data units (PDU) may be utilized, such as, without limitation, cells, frames, datagrams, bridge PDUs, MAC PDUs, segments, bits, symbols, etc.

In various examples, the network device 100 may include one or more ingress points 105 IPₐ - IPₙ, where IPₐ is a first ingress point, and IPₙ is the n-th ingress point (where n is an integer) of the network device 100. An ingress point, as used herein, refers to a location where external data (e.g., external packets) enter the network device 100, such as a switch. In some examples, an ingress point may be associated with a respective port of the switch. In some examples, each ingress point may further be associated (e.g., mapped) to a respective MAC address (e.g., a respective device having a respective MAC address) from which an external packet originates. The switch 100 may similarly include one or more egress points. An egress point, as used herein, refers to a location where data exits a network device 100. Like the ingress points 105, in some examples, the egress point may be associated with a respective port of the switch. In some examples, a respective ingress point and egress point may share a respective port of the switch. For example, in some embodiments, a first ingress point IPₐ and first egress point EPₐ may share the same respective port of the switch 100, and so on through the *n-*th ingress point IPₙ and *n*-th egress point EPₙ.

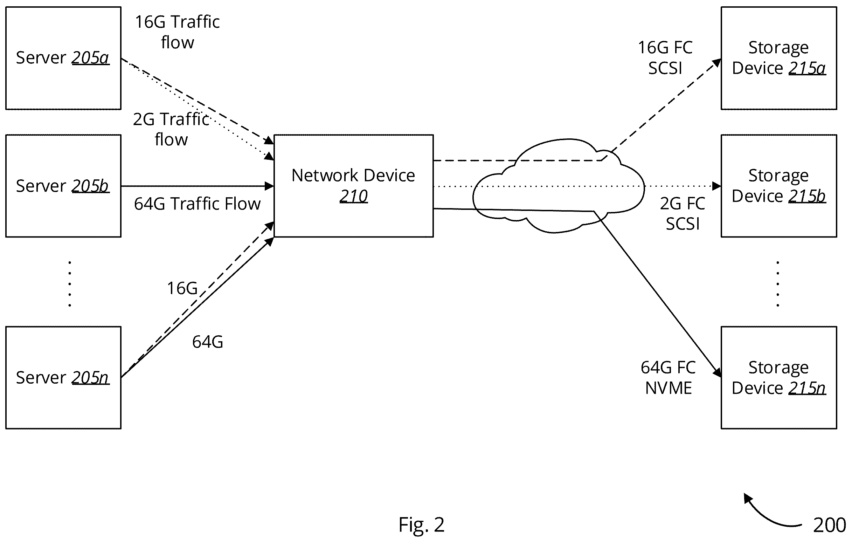

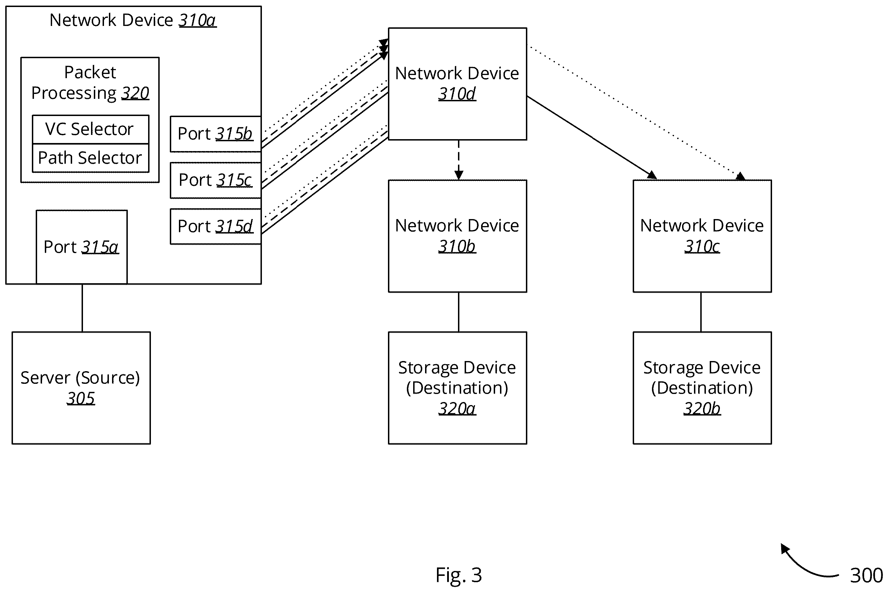

In various examples, the network device 100 includes one or more buffers 115, configured to store packets received from ingress points 105. Traffic may be received by the network device 100 via the one or more ingress points IPₐ - IPₙ. In some examples, traffic received at the one or more ingress points IPₐ - IPₙ may be combined into a common data stream for processing via ingress packet processing logic 110 and/or processing by the MMU 120. For example, the one or more buffers 115 (e.g., packet buffers) may be divided into sets of buffers, where each set is shared by a respective group of traffic flows, as described in greater detail below with respect to Figs. 2 & 3.

The packet processing logic 110 may process packets received via the ingress points 105 and store them in a respective set of buffers of the one or more buffers 115 based, at least in part, on a speed of a source node and/or channel over which the packets were received. The MMU 120 may then process and store the received traffic in memory (external or internal), such as a buffer, and further retrieve data stored in memory to be transmitted.

In various embodiments, the network device 100 comprises one or more processors, DSP, application specific IC (ASIC), FPGA or other programmable logic, or other processing circuit configured to process and implement packet switching functions, such as the MMU 120. The MMU 120 may perform functions according to logic such as packet processing logic 110, traffic manager 125, admission control, queueing, and scheduling.

Logic, as used herein, may be implemented in hardware, software, or a combination of hardware and software (including firmware). Suitable hardware may include one or more processors, digital signal processors (DSP), a custom integrated circuit (IC), programmable logic (such as a field-programmable gate array (FPGA), and/or discrete logic).

Accordingly, in various examples, the packet processing logic 110 may be implemented as software executed on the hardware of the switch 100, such a processor, DSP, application-specific IC (ASIC), FPGA, or in some further examples, by the MMU 120. In various embodiments, packet processing logic 110 includes processing of the packet for storage in the one or more buffers for further processing by the MMU 120.

For example, packet processing logic 110 may include logic (e.g., software, computer readable instructions, or other logic) to determine an egress point EPₐ - EPₙ, or corresponding port of the switch that the packet should be sent through. This may include parsing header information to determine a MAC address (or other address, such as an IP address), and determining a respective port through which the data is to be transmitted. In some examples, determining the respective port through which the data is to be transmitted includes looking up address information (e.g., MAC address, IP address, etc.) in a switching and/or routing table.

In various examples, packet processing logic 110 includes further logic to determine the performance capabilities of a network node and/or communication channel. In some examples, the performance capabilities include a communication speed of the network node and/or communication channel (alternatively referred to simply as the "speed" of a network node and/or communication channel). Accordingly, communication speed refers to the rate at which data can be transmitted by a given network node and/or over a communication channel. In further examples, the performance capabilities may include an upper level protocol (ULP), or combination of ULP and communication speed. ULPs may include, without limitation, internet protocol (IP) based ULPs, such as nonvolatile memory express (NVMe) over IP, small computer system interface (SCSI) over IP (including internet SCSI (iSCSI)), etc., and fiber channel (FC) based ULPs, such as SCSI over FC, fiber connection (FICON) over FC, NVMe over FC, etc. Network nodes, as used herein, refers to endpoint devices coupled together within a network, such as an SAN. Network nodes in an SAN may include, for example, servers, switches, routers, and storage devices.

The packet processing logic 110 may further include logic to create one or more performance groups, and to assign the network node to an appropriate performance group based on the performance capabilities of a network node. In some further examples, the packet processing logic 110 may be configured to merge one or more performance groups, remove one or more performance groups, and/or divide (e.g., split) a single performance groups into multiple performance groups. In yet further examples, the packet processing logic 110 may be configured to allocate hardware resources to each performance group. Hardware resources, for example, may include, without limitation, a set of buffers, virtual channels, and/or ports of the network device 100. In some examples, the hardware resources allocated to a performance group may be exclusive to the respective performance group. Specifically, traffic flows from network nodes assigned to the performance group may be allocated hardware resources that are dedicated exclusively to endpoints and/or traffic flows in the performance group. Packet processing logic 110 may, subsequently, cause packets to be stored in an assigned set of buffers allocated to the performance group to which a network node is assigned.

In various examples, the received, ingress packet may further be processed for storage in memory by MMU 120. Thus, processed ingress packets stored in the one or more buffers 115 may be obtained by the MMU 120 for further processing. In various embodiments, the MMU 120 may include a traffic manager (TM) 125, which further includes admission control logic, queueing logic, and scheduling logic. As previously described, the MMU 120 may include hardware such as a processor or other circuitry that is configured to handle memory storage operations (such as access, read, and/or write operations to memory), manage an ingress data buffer, egress data buffer, admission control, queueing, and scheduling.

In various embodiments, the traffic manager 125 is a component of a network device 100 that handles memory access and storage of ingress traffic, storage of data within a buffer (such as one or more buffers 115) including buffer access control, enqueueing of received packet data into respective logical queues, and dequeuing of packet data, among other functions. In various examples, the TM 125 may be logic implemented within the MMU 120. In other examples, the TM 125 may be dedicated logic, separate from the MMU 120. Accordingly, the TM 125 may be a component of a network device 100 that serves various functions for managing ingress data, and controlling how the data is stored / retrieved.

Packets switching through the TM 125 are queued before being scheduled to the destination port. Accordingly, in various examples, admission control logic may admit and/or drop packets based on the packet priorities and the state of shared packet storage. In various embodiments, admission control may similarly be implemented in logic, and configured to determine whether a packet should be allowed into a packet buffer (or discarded) based on various factors, such as buffer fullness (e.g., how full the egress packet buffer is), and sharing of ports and/or queues (e.g., egress queues).

Data allowed by admission control logic may then be enqueued via queueing logic. In various embodiments, queueing logic may be configured to enqueue data from the packet buffer into one or more output queues (also referred to as "egress queues," or "logical queues"). For example, in some embodiments, packets in the one or more buffers 115 (e.g., packet buffers) may be linked together and grouped into output queues of respective ports. For example, each port (or respective egress point) may have one or more logical queues. Packets may be enqueued into a respective queue of the one or more logical queues by the queueing logic. Output queues may refer to a queues that store packets for transmission to a destination port (or one or more destination ports). Each destination port may be associated with a respective output queue, or a respective set of one or more output queues. In some examples, output queues may include virtual output queues (VoQ). Queueing logic may further be configured to dequeue packets from the respective one or more logical queues based on an arbitration scheme. Accordingly, in various examples, the queueing logic may be configured to enqueue packets from the packet buffer into respective logical queues, and dequeue packets from the one or more logical queues for output. Logical queues, as used herein, refers to queues that are categorized based on properties, such as priority, order of arrival, destination address (or range of destination addresses), multicast or unicast requirements, destination or source ports, etc.

Data (e.g., cells or packets) associated with packets for transmission may then be scheduled, via scheduling logic, for output and processing. As above, scheduling logic may be configured to determine a sequence in which packets are dequeued, and a packet is selected for transmission (e.g., egress). Thus, in some examples, the scheduling logic may be configured to determine an order in which packets are dequeued, selected from a packet buffer, and transmitted. Accordingly, in various embodiments, scheduling may refer to the process of scheduling packets based on various criteria, such as priority, fairness, performance metrics (such as latency, throughput, etc.), or based on an arbitration scheme, such as, without limitation, first-in first-out (FIFO), priority (such as strict priority), round robin (including weighted round robin), etc.

Accordingly, dequeuing refers to the process of removing a packet that was stored in the respective queue for transmission by the switch to a destination (via a respective egress point / port). Dequeuing further ensures that packets are transmitted in the correct order (e.g., via scheduling logic), as described above. Packets may then be retrieved from storage by the MMU 120 (e.g., TM 125) and placed in an egress buffer for further processing and downstream transmission.

Fig. 2 is a schematic block diagram of a SAN 200 implementing capability-based traffic engineering, in accordance with various embodiments. The SAN 200 includes one or more servers 205a-205n, network device 210, and one or more storage devices 215a-215n. It should be noted that the various elements of the SAN 200 are schematically illustrated in Fig. 2, and that modifications to the various components and other arrangements of the SAN 200 may be possible and in accordance with the various embodiments.

In various examples, the one or more servers 205a-205n, network device 210, and one or more storage devices 215a-215n may be network nodes of the SAN 200. The one or more servers 205a-205n may, in some examples, be referred to as a source device / node. The one or more storage devices 215a-215n may be referred to as a destination device / node.

As previously described, the network device 210 may be configured to determine the performance capabilities of the various network nodes of the SAN 200. For example, in some embodiments, the performance capabilities of the respective servers of the one or more servers 205a-205n may be determined by a packet processing logic of the network device 210.

As depicted in Fig. 2, a first server 205a may be coupled to the network device 210 via two or more separate traffic flows carrying packets associated with respective input/output (I/O) workloads via separate source devices (e.g., storage devices 215a-215n). In some examples, a first traffic flow may be a 16G traffic flow and a second traffic flow may be a 2G traffic flow.

The second server 205b may be coupled to the network device 210, with a single traffic flow between the server 205b and network device 210. In some examples, the traffic flow between the second server 205b and the network device 210 (or respective destination device 215a-215n) may be a 64G traffic flow. An n-th server 205n, where n is an integer, of the one or more servers 205a-205n may be coupled to the network device 210 with two traffic flows, a first traffic flow being 16G and a second traffic flow being 64G. The network device 210 may, accordingly, direct traffic from the respective traffic flows to appropriate hardware resources allocated to respective performance groups. For example, traffic associated with a 16G traffic flow may be stored in a respectively allocated set of buffers, and transported over an allocated virtual channel (VC), and/or scheduling slots. 64G traffic may similarly be directed to respectively allocated hardware resources, and 2G traffic directed to respectively allocated hardware resources.

In various examples, each traffic flows may respectively be assigned to a performance groups by the network device 210. For example, in some embodiments, the 16G traffic flows may be assigned to the same performance group (for example, a 16G FC SCSI performance group), and the 64G traffic flows similarly assigned to the same performance group, such as a 64G FC NVME performance group. The 2G traffic flow may be assigned to its own performance group, such as a 2G FC SCSI performance group. Accordingly, in some embodiments, each traffic flow may respectively be assigned to a performance group, each traffic flow associated with a respective virtual channel. Alternatively, the network node itself (e.g., all traffic flows from a respective network node) may be assigned to the performance group.

In addition to speed (e.g., traffic flow speed and/or link speed), a traffic flow may be assigned to a performance group based on a ULP supported by the traffic flow. For example, different ULPs supported in the network may be grouped to provide segregation across ULPs.

In some embodiments, the maximum throughput of a flow is limited by the lowest speed among all the hop in the path from the source device (e.g., one or more servers 205a-205n) to the destination device/port (e.g., the one or more storage devices 215a-215b). In some examples, the destination device/port speed can be used for the grouping. Thus, all traffic flows gong to the same destination device, virtual channel speed, and/or port speed may be grouped together into the same performance group. As used herein, the port speed refers to the rate at which data can be transmitted through a respective port.

In some examples, multi-tenant workloads with different ULPs running on a unified network may be grouped based on the ULP. The ULP storage protocol is discovered in the control plane and buffer sharing is controlled in the data plane through the group membership. Traffic flows in different ULP tenants may be separated from each other. The flow control semantics (e.g., lossless or lossy labels) is also used in the group definition to provide further segregation of traffic flows to achieve higher SLAs.

In some further embodiments, capability-based grouping may be extended to endpoints like network device 210 (e.g., the link between server/storage device and network, including switches such as network device 210) for optimal performance and resiliency across all hops in the SAN 200 in the path between a server and storage. The network devices, such as network device 210, may propagate performance group definitions, allocated hardware resources, and assigned traffic flows. Each respective end device (e.g., network device) allocates necessary hardware resource sets based on performance group properties.

In some examples, various factors, such as network under provisioning, over subscription of end-devices, and device misbehavior, may cause congestion issues. When network resources are shared across various traffic, when even one end device or a single path becomes congested, it can back-pressure into the network and affect the performance of other unrelated traffic. In some further embodiments, to mitigate the impact of congestion, the congestion in the network is monitored continuously and when congestion is detected, a new performance group may be provisioned (e.g., via network device 210) in the SAN 200. In some examples, affected traffic flows may be moved to the new performance band, where the new performance band is assigned congested traffic. Accordingly, in some examples, all unrelated traffic can be isolated from the congested traffic.

Similarly, in some examples, long distance links may become congested. Accordingly, in some embodiments, a performance group may be provisioned for long distance connections (e.g., traffic flows). In some examples, performance groups may be provisioned dynamically based on congestion, and traffic going over long distances may be isolated to separate hardware resources allocated to a long-distance performance group.

In some further embodiments, classification of traffic flows and assignment to performance groups may occur based on real-time metrics. For example, as traffic is traversing the SAN 200 fabric, various metrics of workloads are collected on a real-time basis. Based on the collected metrics, additional hardware resources may be allocated and/or additional performance groups provisioned. For example, performance bands may be provisioned for full frame size workloads. When a workload consists of short frames, then allocating more buffers will enhance the performance of that workload. In such a case, a short-frame performance group may be created with more resources and the workload assigned to the newly created performance group.

Fig. 3 is a schematic block diagram of dataplane operations within a SAN 300 implementing capability-based traffic engineering, in accordance with various embodiments. As previously described, an SAN 300 may include a server 305 (source device), network devices 310a-310d (end device), including a first network device 310a, second network device 310b, third network device 310c, and fourth network device 310d, first storage device 320a (destination device), and second storage device 320b). The first network device 310a includes ports 315a-315d, and packet processing logic 320. It should be noted that the various elements of the SAN 300 are schematically illustrated in Fig. 3, and that modifications to the various components and other arrangements of the SAN 300 may be possible and in accordance with the various embodiments.

In various embodiments, when an external device, such as a server 305 or storage device 320a-320b, joins the SAN 300, device performance capabilities like speed and the supported protocol ULPs are learned. Speed, as used herein, may refer to traffic flow / workflow speeds. Based on the learned capability, the flows to/from the respective device are added to an existing or new performance group that is allocated a respective set of hardware resources (e.g., VCs and buffer resources). The data plane is updated to classify/identify the flow and choose the provisioned VC / buffer for use.

In some embodiments, when an FC device comes online into the fabric (e.g., a switched fabric of network nodes connected by switches), the device speed can be learned through a speed of a link of the newly connected device. In some examples, a device connecting to the SAN 300, for example, may perform a device registration with a name server of the SAN 300, and provide its storage protocol capabilities. The collective performance capability information is cached in the local switch, such as network device 310a, where the device is connected and also propagated to every other switch in the fabric, such as network devices 310a-310c.

In some embodiments, when an IP device comes online into the fabric, the device speed can be learned. Moreover, the lossy / lossless priorities and ULP associations may be learned as part of a link layer discovery protocol (LLDP) exchange. Every IP storage ULP is associated with a unique TCP/UDP port number. The learned performance capability information of every connected device is cached in the local switch, such as network device 310a, where the device is connected and also propagated to every switch in the fabric.
In various embodiments, the SAN 300 may be configured to define new performance groups. In some embodiment, the network device 310a or other local switching device, and specifically packet processing logic 320, may be configured to define one or more performance groups. Table 1 outlines an example of a performance group table comprising a plurality of performance group definitions, where unique resources are available to be allocated for each ULP/speed combination supported in the SAN 300.

**Table 2: Example table of performance group definitions**

| PG name | PG attributes | PG membership | Hardware Resource (VC/buffers) |
|---|---|---|---|
| PG_FC_SCSI_1G | Protocol: FC_SCSI | DID1, DID2, DID3, ... | RSRC 0 |
| | Speed: 1G | | |
| PG_FC_SCSI_2G | Protocol: FC_SCSI | DID1, DID2, DID3, ... | RSRC 1 |
| | Speed: 2G | | |
| PG_FC_SCSI_4G | Protocol: FC_SCSI | DID1, DID2, DID3, ... | RSRC 2 |
| | Speed: 4G | | |
| PG_FC_SCSI_8G | Protocol: FC_SCSI | DID1, DID2, DID3, ... | RSRC 3 |
| | Speed: 8G | | |
| PG_FC_SCSI_16G | Protocol: FC_SCSI | DID1, DID2, DID3, ... | RSRC 4 |
| | Speed: 16G | | |
| PG_FC_SCSI_32G | Protocol: FC_SCSI | DID1, DID2, DID3, ... | RSRC 5 |
| | Speed: 32G | | |
| PG_FC_SCSI_64G | Protocol: FC_SCSI | DID1, DID2, DID3, ... | RSRC 6 |
| | Speed: 64G | | |
| PG_FC_NVME_32G | Protocol: FC_NVME | DID1, DID2, DID3, ... | RSRC 7 |
| | Speed: 1G | | |
| PG_FC_NVME_64G | Protocol: FC_NVME | DID1, DID2, DID3, ... | RSRC 8 |
| | Speed: 1G | | |
| PG_IP_ISCSI_LOSSY_10G | Protocol: IP_ISCSI | DIP1, DIP2, DIP3, ... | RSRC 9 |
| | Speed: 10G | | |
| PG_IP_NVME_LOSSLESS_10G | Protocol: IP_NVME | DIP1, DIP2, DIP3, ... | RSRC 10 |
| | Speed: 10G | | |
| PG_IP_ISCSI_LOSSY_25G | Protocol: IP_ISCSI | DIP1, DIP2, DIP3, ... | RSRC 11 |
| | Speed: 25G | | |
| PG_IP_NVME_LOSSLESS_25G | Protocol: IP_NVME | DIP1, DIP2, DIP3, ... | RSRC 12 |
| | Speed: 25G | | |

Accordingly, for each performance group, the performance group definition includes a ULP protocol, speed, a listing of performance group members such as device identifiers (DID) or device IP addresses (DIP) depending on the supported ULP of the performance group, and a listing of allocated hardware resources (RSRC), such as buffers and VCs.

When an external device, such as a server 305 and/or storage device 320a, 320b disconnects from the network fabric (e.g., SAN 300), traffic flows associated with a removed device may be removed from an associated performance group. The dataplane classification for the traffic flows may be removed. In some examples, when a performance group is determined to be empty (no traffic flows are assigned to a given performance group), the performance group may be deleted and allocated hardware resources (VC and buffer resources) may be released.

Apart from initial provisioning of PGs and the update of their membership, periodically the entire performance group table (e.g., all performance group definitions) may be evaluated and updated dynamically. For example, based on the current performance capability combinations present in the fabric, a new set of PGs may be computed. The set of computed PGs may be referred to herein as the "compute set."

In some examples, if a number of PGs in a compute set is less than an available number of VCs, a performance group may be split into multiple performance groups. In some examples, the performance groups having the highest speeds may be split in descending order until a total number of performance groups is equal to the number of VCs. In other examples, if the number of performance groups in the compute set is greater than an available number of VCs, two or more performance groups may be combined into a single performance group. In some examples, two or more lower speed performance groups may be combined (e.g., merged) until the total number of performance groups in the compute set is equal to the number of VCs.

When the number of performance groups in the compute set is the same as the available number of VCs, performance groups that are not present in the compute set may be removed and any allocated hardware resources to the unused performance group may be released. Any performance groups present in the compute set, but not currently active and allocated hardware resources, may then be allocated appropriate hardware resources.

For each PG in the compute set, the datapath may be updated so that traffic flows associated with member network nodes (e.g., source devices, destination devices and/or end devices) use the respectively allocated VC buffers.

An example of a combined (e.g., merged) performance group which merges the lower speeds 1G, 2G, 4G is given below.

**Table 3: Example of a combined performance group definition**

| PG name | PG attributes | PG membership | Hardware Resource (VC / Buffers) |
|---|---|---|---|
| PG_FC_SCSI_1G_2G_4G | Protocol: FC_SCSI | DID1, DID2, DID3, ... | RSRC 10 |
| | Speed: 1G, 2G, 4G | | |

As defined in the table above, a combined performance group may combine the performance groups members having 1G, 2G, and 4G FC SCSI traffic flows, sharing the same set of allocated hardware resources (e.g., VCs and buffers), RSRC 10.

An example of a split performance group where there are more than 1 PG object allocated for the same speed and protocol (32G FC SCSI) is given below.

**Table 4: Example of split performance group definitions**

| PG name | PG attributes | PG membership | Hardware Resource (VC / Buffers) |
|---|---|---|---|
| PG_FC_SCSI_32G_1 | Protocol: FC_SCSI | DID1, DID2, DID3, ... | RSRC 10 |
| | Speed: 32G | | |
| PG_FC_SCSI_32G_1 | Protocol: FC_SCSI | DID100, DID200, DID300, ... | RSRC 11 |
| | Speed: 32G | | |

Here a single performance group may be split into two separate performance group having the same supported ULPs (e.g., FC SCSI) and link speeds (e.g., 32G). The first performance group may include performance group members (DID1, DID2, DID3, . . .) and allocated hardware resources, RSRC 10, separate from the second performance group, having assigned members (DID100, DID200, DID300, . . .) and allocated hardware resources, RSRC 11.

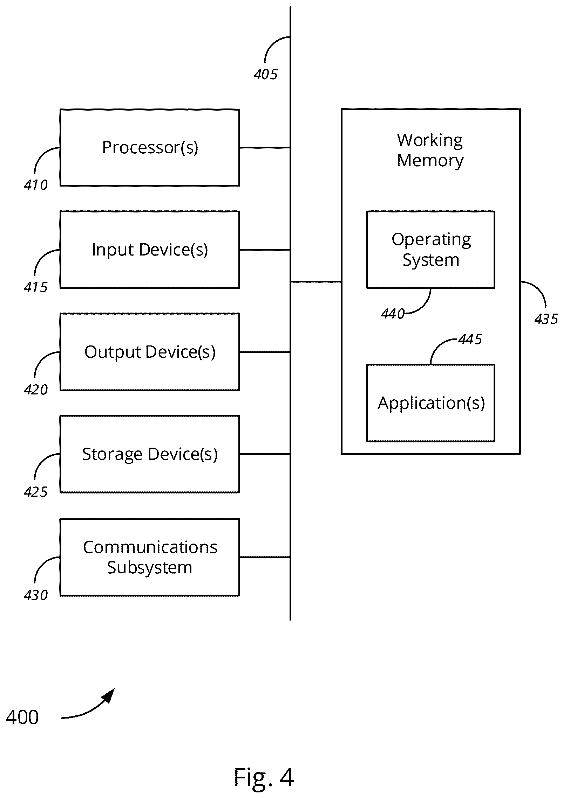

Fig. 4 provides a schematic illustration of one embodiment of a computer system 400, such as the network device 100, or subsystems thereof, such as the packet processing logic 110, MMU 120, TM 125, or combinations thereof, which may perform the methods provided by various other embodiments, as described herein. It should be noted that Fig. 4 only provides a generalized illustration of various components, of which one or more of each may be utilized as appropriate. Fig. 4, therefore, broadly illustrates how individual system elements may be implemented in a relatively separated or relatively more integrated manner.

The computer system 400 includes multiple hardware elements that may be electrically coupled via a bus 405 (or may otherwise be in communication, as appropriate). The hardware elements may include one or more processors 410, including, without limitation, one or more general-purpose processors and/or one or more special-purpose processors (such as microprocessors, digital signal processing chips, graphics acceleration processors, and microcontrollers); one or more input devices 415, which include, without limitation, a mouse, a keyboard, one or more sensors, and/or the like; and one or more output devices 420, which can include, without limitation, a display device, and/or the like.

The computer system 400 may further include (and/or be in communication with) one or more storage devices 425, which can comprise, without limitation, local and/or network accessible storage, and/or can include, without limitation, a disk drive, a drive array, an optical storage device, solid-state storage device such as a random-access memory ("RAM") and/or a read-only memory ("ROM"), which can be programmable, flash-updateable, and/or the like. Such storage devices may be configured to implement any appropriate data stores, including, without limitation, various file systems, database structures, and/or the like.

The computer system 400 might also include a communications subsystem 430, which may include, without limitation, a modem, a network card (wireless or wired), an IR communication device, a wireless communication device and/or chipset (such as a Bluetooth^{™} device, an 802.11 device, a WiFi device, a WiMax device, a WWAN device, a Z-Wave device, a ZigBee device, cellular communication facilities, etc.), and/or an LP wireless device as previously described. The communications subsystem 430 may permit data to be exchanged with a network (such as the network described below, to name one example), with other computer or hardware systems, between data centers or different cloud platforms, and/or with any other devices described herein. In many embodiments, the computer system 400 further comprises a working memory 435, which can include a RAM or ROM device, as described above.

The computer system 400 also may comprise software elements, shown as being currently located within the working memory 435, including an operating system 440, device drivers, executable libraries, and/or other code, such as one or more application programs 445, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general-purpose computer (or other device) to perform one or more operations in accordance with the described methods.

A set of these instructions and/or code might be encoded and/or stored on a non-transitory computer-readable storage medium, such as the storage device(s) 425 described above. In some cases, the storage medium might be incorporated within a computer system, such as the system 400. In other embodiments, the storage medium might be separate from a computer system (i.e., a removable medium, such as a compact disc, etc.), and/or provided in an installation package, such that the storage medium can be used to program, configure, and/or adapt a general purpose computer with the instructions/code stored thereon. These instructions might take the form of executable code, which is executable by the computer system 400 and/or might take the form of source and/or installable code, which, upon compilation and/or installation on the computer system 400 (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware (such as programmable logic controllers, single board computers, FPGAs, ASICs, and SoCs) might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer or hardware system (such as the computer system 400) to perform methods in accordance with various embodiments of the invention. According to a set of embodiments, some or all of the procedures of such methods are performed by the computer system 400 in response to processor 410 executing one or more sequences of one or more instructions (which might be incorporated into the operating system 440 and/or other code, such as an application program 445) contained in the working memory 435. Such instructions may be read into the working memory 435 from another computer-readable medium, such as one or more of the storage device(s) 425. Merely by way of example, execution of the sequences of instructions contained in the working memory 435 might cause the processor(s) 410 to perform one or more procedures of the methods described herein.

In an embodiment implemented using the computer system 400, various computer-readable media might be involved in providing instructions/code to processor(s) 410 for execution and/or might be used to store and/or carry such instructions/code (e.g., as signals). In many implementations, a computer-readable medium is a non-transitory, physical, and/or tangible storage medium. In some embodiments, a computer-readable medium may take many forms, including, but not limited to, non-volatile media, volatile media, or the like. Non-volatile media includes, for example, optical and/or magnetic disks, such as the storage device(s) 425. Volatile media includes, without limitation, dynamic memory, such as the working memory 435. In some alternative embodiments, a computer-readable medium may take the form of transmission media, which includes, without limitation, coaxial cables, copper wire, and fiber optics, including the wires that comprise the bus 405, as well as the various components of the communication subsystem 430 (and/or the media by which the communications subsystem 430 provides communication with other devices). In an alternative set of embodiments, transmission media can also take the form of waves (including, without limitation, radio, acoustic, and/or light waves, such as those generated during radio-wave and infra-red data communications).

Various forms of computer-readable media may be involved in carrying one or more sequences of one or more instructions to the processor(s) 410 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 400. These signals, which might be in the form of electromagnetic signals, acoustic signals, optical signals, and/or the like, are all examples of carrier waves on which instructions can be encoded, in accordance with various embodiments of the invention.

The communications subsystem 430 (and/or components thereof) generally receives the signals, and the bus 405 then might carry the signals (and/or the data, instructions, etc. carried by the signals) to the working memory 435, from which the processor(s) 410 retrieves and executes the instructions. The instructions received by the working memory 435 may optionally be stored on a storage device 425 either before or after execution by the processor(s) 410.

While some features and aspects have been described with respect to the embodiments, one skilled in the art will recognize that numerous modifications are possible. For example, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise. Consequently, although several embodiments are described above, it will be appreciated that the invention is intended to cover all modifications and equivalents within the scope of the following claims.

The invention further comprises the following embodiments forming part of the description:
1. An apparatus comprising:
   one or more ingress points configured to receive one or more packets from a first network node; and
   a logic configured to determine a communication speed of the first network node,
   wherein the logic is configured to determine, based at least in part on the communication speed of the first network node, a group of network nodes of a plurality of groups of network nodes to assign the first network node,
   wherein in response to determining that the communication speed of the first network node is greater than or equal to a first speed, assign the first network node to a first group of network nodes of the plurality of groups of network nodes, wherein the first group of network nodes includes network nodes configured to communicate at at least a first speed; and
   store the one or more packets from the first network node in a first set of buffers, wherein the first set of buffers is configured to store packets associated with the first group of network nodes.
2. The apparatus of embodiment 1, further comprising a second set of buffers of the two or more sets of buffers, the second set of buffers configured to store packets associated with a second group of network nodes, the second group of network nodes configured to communicate at at least a second speed and slower than the first speed.
3. The apparatus of embodiment 1, wherein the logic is configured to determine the communication speed of the first network node based, at least in part, on a service level agreement (SLA) associated with the first network node.
4. The apparatus of embodiment 1, wherein the logic is configured to determine the communication speed of the first network node based, at least in part, on a data rate of a fiber channel connecting the first network node to the one or more ingress points.
5. The apparatus of embodiment 1, wherein the logic is configured to determine the communication speed of the first network node based, at least in part, on a data rate of an internet protocol (IP) connection between the first network node to the one or more ingress points.
6. The apparatus of embodiment 1, wherein the logic is further configured to:
   determine a supported protocol of the first network node based, at least in part, on an Upper-Level Protocol (ULP) supported by the first network node; and
   assign the first network node to the first group of network nodes based, at least in part, on the communication speed of the first network node and the ULP of the first network node.
7. The apparatus of embodiment 1, wherein the logic is further configured to:
   determine a total number of groups of network nodes of the plurality of groups of network nodes including the first group of network nodes,
   wherein in response to determining that the total number of groups of network nodes is less than a number of virtual channels, splitting at least one of group of network nodes into two or more groups of network nodes.
8. The apparatus of embodiment 1, wherein the logic is further configured to:
   determine a total number of groups of the plurality of groups of network nodes including the first group of network nodes,
   wherein in response to determining that that the total number of groups of network nodes is greater than a number of virtual channels, combining two or more groups of into a single group.
9. The apparatus of embodiment 1, wherein the logic is further configured to:
   determine a total number of groups of network nodes of the plurality of groups of network nodes including the first group of network nodes,
   wherein in response to determining that the total number of groups of network nodes is the same as a number of available virtual channels, the logic is further configured to:
   delete an unused group of network nodes of the plurality of groups of network nodes to which no devices are assigned; and
   release virtual channels associated with the unused group of network nodes.
10. A network device comprising:
   one or more ingress points configured to receive one or more packets from a first network node;
   a first set of buffers configured to store packets associated with a first group of network nodes, the first group of network nodes configured to communicate at at least a first speed; and
   a packet processing logic configured to determine a communication speed of the first network node over a first channel,
   wherein the packet processing logic is configured to determine, based at least in part on the communication speed of the first network node, a group of networks nodes of a plurality of groups of network nodes to assign the first network node,
   wherein in response to determining that the communication speed of the first network node is greater than or equal to a first speed, assign the first network node to a first group nodes of the plurality of groups of network nodes; and
   store the one or more packets from the first network node in the first set of buffers.
11. The network device of embodiment 10, further comprising a second set of buffers of the two or more sets of buffers, the second set of buffers configured to store packets associated with a second group of network nodes, the second group of network nodes configured to communicate at at least a second speed and slower than the first speed.
12. The network device of embodiment 10, wherein the packet processing logic is further configured to:
   determine a supported protocol of the first network node based, at least in part, on an Upper-Level Protocol (ULP) supported by the first network node; and
   assign the first network node to the first group of network nodes based, at least in part, on the communication speed of the first network node and the ULP of the first network node.
13. The network device of embodiment 10, wherein the packet processing logic is further configured to:
   determine a total number of groups of network nodes of the plurality of groups of network nodes including the first group of network nodes,
   wherein in response to determining that the total number of groups of network nodes is less than a number of virtual channels, splitting at least one of group of network nodes into two or more groups of network nodes.
14. The network device of embodiment 10, wherein the packet processing logic is further configured to:
   determine a total number of groups of the plurality of groups of network nodes including the first group of network nodes,
   wherein in response to determining that that the total number of groups of network nodes is greater than a number of virtual channels, combining two or more groups of into a single group.
15. The network device of embodiment 10, wherein the packet processing logic is further configured to:
   determine a total number of groups of network nodes of the plurality of groups of network nodes including the first group of network nodes,
   wherein in response to determining that the total number of groups of network nodes is the same as a number of available virtual channels, the packet processing logic is further configured to:
      delete an unused group of network nodes of the plurality of groups of network nodes to which no devices are assigned; and
      release virtual channels associated with the unused group of network nodes.
16. A system comprising:
   one or more network nodes including a first network node;
   a network device coupled to the one or more network nodes, wherein each network node of the one or more network nodes is connected to the network device via a respective communication channel, wherein the first node is coupled to the first network device via a first channel, the network device comprising:
   one or more ingress points configured to receive one or more packets from the first network node;
   a first set of buffers configured to store packets associated with a first group of network nodes, the first group of network nodes configured to communicate at at least a first speed; and
   a packet processing logic configured to determine a communication speed of the first network node over the first channel,
   wherein the packet processing logic is configured to determine, based at least in part on the communication speed of the first network node, a group of networks nodes of a plurality of groups of network nodes to assign the first network node,
   wherein in response to determining that the communication speed of the first network node is greater than or equal to a first speed, assign the first network node to a first group nodes of the plurality of groups of network nodes; and
   store the one or more packets from the first network node in the first set of buffers.
17. The system of embodiment 16, wherein the traffic manager is further configured to group the one or more packets into one or more blocks of packets, the one or more blocks of packets including a first block of one or more first packets and a second block of one or more second packets.
18. The system of embodiment 16, wherein the packet processing logic is further configured to:
   determine a total number of groups of network nodes of the plurality of groups of network nodes including the first group of network nodes,
   wherein in response to determining that the total number of groups of network nodes is less than a number of virtual channels, splitting at least one of group of network nodes into two or more groups of network nodes.
19. The system of embodiment 16, wherein the packet processing logic is further configured to:
   determine a total number of groups of the plurality of groups of network nodes including the first group of network nodes,
   wherein in response to determining that that the total number of groups of network nodes is greater than a number of virtual channels, combining two or more groups of into a single group.
20. The system of embodiment 16, wherein the packet processing logic is further configured to:
   determine a total number of groups of network nodes of the plurality of groups of network nodes including the first group of network nodes,
   wherein in response to determining that the total number of groups of network nodes is the same as a number of available virtual channels, the packet processing logic is further configured to:
      delete an unused group of network nodes of the plurality of groups of network nodes to which no devices are assigned; and
      release virtual channels associated with the unused group of network nodes.

## Claims

1. An apparatus comprising:
one or more ingress points configured to receive one or more packets from a first network node; and
a logic configured to determine a communication speed of the first network node,
wherein the logic is configured to determine, based at least in part on the communication speed of the first network node, a group of network nodes of a plurality of groups of network nodes to assign the first network node,
wherein in response to determining that the communication speed of the first network node is greater than or equal to a first speed, assign the first network node to a first group of network nodes of the plurality of groups of network nodes, wherein the first group of network nodes includes network nodes configured to communicate at at least a first speed; and
store the one or more packets from the first network node in a first set of buffers, wherein the first set of buffers is configured to store packets associated with the first group of network nodes.

2. The apparatus of claim 1, further comprising a second set of buffers of the two or more sets of buffers, the second set of buffers configured to store packets associated with a second group of network nodes, the second group of network nodes configured to communicate at at least a second speed and slower than the first speed.

3. The apparatus of claim 1 or claim 2, wherein the logic is configured to determine the communication speed of the first network node based, at least in part, on a service level agreement (SLA) associated with the first network node,
and/or
wherein the logic is configured to determine the communication speed of the first network node based, at least in part, on a data rate of a fiber channel connecting the first network node to the one or more ingress points.

4. The apparatus of one of claims 1 to 3, wherein the logic is configured to determine the communication speed of the first network node based, at least in part, on a data rate of an internet protocol (IP) connection between the first network node to the one or more ingress points,
and/or
wherein the logic is further configured to:
determine a supported protocol of the first network node based, at least in part, on an Upper-Level Protocol (ULP) supported by the first network node; and
assign the first network node to the first group of network nodes based, at least in part, on the communication speed of the first network node and the ULP of the first network node.

5. The apparatus of one of claims 1 to 4, wherein the logic is further configured to:
determine a total number of groups of network nodes of the plurality of groups of network nodes including the first group of network nodes,
wherein in response to determining that the total number of groups of network nodes is less than a number of virtual channels, splitting at least one of group of network nodes into two or more groups of network nodes.

6. The apparatus of one of claims 1 to 5, wherein the logic is further configured to:
determine a total number of groups of the plurality of groups of network nodes including the first group of network nodes,
wherein in response to determining that that the total number of groups of network nodes is greater than a number of virtual channels, combining two or more groups of into a single group.

7. The apparatus of one of claims 1 to 6, wherein the logic is further configured to:
determine a total number of groups of network nodes of the plurality of groups of network nodes including the first group of network nodes,
wherein in response to determining that the total number of groups of network nodes is the same as a number of available virtual channels, the logic is further configured to:
delete an unused group of network nodes of the plurality of groups of network nodes to which no devices are assigned; and
release virtual channels associated with the unused group of network nodes.

8. A network device comprising:
one or more ingress points configured to receive one or more packets from a first network node;
a first set of buffers configured to store packets associated with a first group of network nodes, the first group of network nodes configured to communicate at at least a first speed; and
a packet processing logic configured to determine a communication speed of the first network node over a first channel,
wherein the packet processing logic is configured to determine, based at least in part on the communication speed of the first network node, a group of networks nodes of a plurality of groups of network nodes to assign the first network node,
wherein in response to determining that the communication speed of the first network node is greater than or equal to a first speed, assign the first network node to a first group nodes of the plurality of groups of network nodes; and
store the one or more packets from the first network node in the first set of buffers.

9. The network device of claim 8, further comprising a second set of buffers of the two or more sets of buffers, the second set of buffers configured to store packets associated with a second group of network nodes, the second group of network nodes configured to communicate at at least a second speed and slower than the first speed.

10. The network device of claim 8 or claim 9, wherein the packet processing logic is further configured to:
determine a supported protocol of the first network node based, at least in part, on an Upper-Level Protocol (ULP) supported by the first network node; and
assign the first network node to the first group of network nodes based, at least in part, on the communication speed of the first network node and the ULP of the first network node,
and/or
wherein the packet processing logic is further configured to:
determine a total number of groups of network nodes of the plurality of groups of network nodes including the first group of network nodes,
wherein in response to determining that the total number of groups of network nodes is less than a number of virtual channels, splitting at least one of group of network nodes into two or more groups of network nodes.

11. The network device of claim 8 or claim 9 or claim 10, wherein the packet processing logic is further configured to:
determine a total number of groups of the plurality of groups of network nodes including the first group of network nodes,
wherein in response to determining that that the total number of groups of network nodes is greater than a number of virtual channels, combining two or more groups of into a single group,
and/or
wherein the packet processing logic is further configured to:
determine a total number of groups of network nodes of the plurality of groups of network nodes including the first group of network nodes,
wherein in response to determining that the total number of groups of network nodes is the same as a number of available virtual channels, the packet processing logic is further configured to:
delete an unused group of network nodes of the plurality of groups of network nodes to which no devices are assigned; and
release virtual channels associated with the unused group of network nodes.

12. A system comprising:
one or more network nodes including a first network node;
a network device coupled to the one or more network nodes, wherein each network node of the one or more network nodes is connected to the network device via a respective communication channel, wherein the first node is coupled to the first network device via a first channel, the network device comprising:
one or more ingress points configured to receive one or more packets from the first network node;
a first set of buffers configured to store packets associated with a first group of network nodes, the first group of network nodes configured to communicate at at least a first speed; and
a packet processing logic configured to determine a communication speed of the first network node over the first channel,
wherein the packet processing logic is configured to determine, based at least in part on the communication speed of the first network node, a group of networks nodes of a plurality of groups of network nodes to assign the first network node,
wherein in response to determining that the communication speed of the first network node is greater than or equal to a first speed, assign the first network node to a first group nodes of the plurality of groups of network nodes; and
store the one or more packets from the first network node in the first set of buffers.

13. The system of claim 12, wherein the traffic manager is further configured to group the one or more packets into one or more blocks of packets, the one or more blocks of packets including a first block of one or more first packets and a second block of one or more second packets,
and/or
wherein the packet processing logic is further configured to:
determine a total number of groups of network nodes of the plurality of groups of network nodes including the first group of network nodes,
wherein in response to determining that the total number of groups of network nodes is less than a number of virtual channels, splitting at least one of group of network nodes into two or more groups of network nodes.

14. The system of claim 12 or claim 13, wherein the packet processing logic is further configured to:
determine a total number of groups of the plurality of groups of network nodes including the first group of network nodes,
wherein in response to determining that that the total number of groups of network nodes is greater than a number of virtual channels, combining two or more groups of into a single group.

15. The system of one of claims 12 to 14, wherein the packet processing logic is further configured to:
determine a total number of groups of network nodes of the plurality of groups of network nodes including the first group of network nodes,
wherein in response to determining that the total number of groups of network nodes is the same as a number of available virtual channels, the packet processing logic is further configured to:
delete an unused group of network nodes of the plurality of groups of network nodes to which no devices are assigned; and
release virtual channels associated with the unused group of network nodes.
